# FASCICULE DE BREVET EUROPEEN

(11) **EP 4 193 890 B1**
(45) Date de publication et mention de la délivrance du brevet: **24.07.2024**
(21) Numéro de dépôt: 22207295.1
(22) Date de dépôt: 14.11.2022
(51) Int. Cl.: A47J 31/44

(54) **MACHINE DE DISTRIBUTION DE BOISSONS CHAUDES AVEC BAC D'ÉGOUTTAGE**
HEISSGETRÄNKEAUSGABEMASCHINE MIT TROPFSCHALE
HOT DRINK DISPENSING MACHINE WITH DRIP TRAY

(30) Priorité: 07.12.2021 FR 2113042
(43) Date de publication de la demande: 14.06.2023
(73) Titulaire: SEB S.A., 69130 Ecully (FR)
(72) Inventeur: DUTOYA, Laurence, 69134 ECULLY CEDEX (FR); LEBUFFE, Gilles, 69134 ECULLY CEDEX (FR)
(74) Mandataire: Germain Maureau

(56) Documents cités:
- DE-A1- 10 330 734
- DE-A1- 102013 223 610
- US-A1- 2014 263 432

## Description

### Domaine technique de l'invention

La présente invention concerne de manière générale les machines de préparation de boissons, et en particulier les machines de préparation de boissons chaudes équipées d'un bac d'égouttage. On peut englober dans ce domaine technique les machines à café ou autres boissons chaudes, comme le thé, le chocolat chaud, les tisanes.

### État de la technique

Dans l'art antérieur des machines de préparation de boisson équipées d'un bac d'égouttage, on connait le document EP2265157B1 qui divulgue une machine à café avec un bac d'égouttage. Il est connu d'équiper de telles machines de préparation de boisson avec des dispositifs de détection de niveau de liquide dans le bac d'égouttage pour éviter les débordements. De tels débordements sont principalement occasionnés à la suite de cycles de purge, de rinçage ou de nettoyage de la machine mais peuvent également être occasionnés à la suite du débordement d'un contenant. En contrepartie, ce système peut présenter l'inconvénient d'arrêter la machine et de forcer l'utilisateur à vider lorsque le bac d'égouttage est plein, à un moment peu opportun (par exemple lorsqu'il faut préparer une succession de boissons de manière rapide). Le document DE-A-102013223610 décrit une machine de distribution de boissons selon le préambule de la revendication indépendante 1.

### Exposé de l'invention

Un but de la présente invention est de répondre aux inconvénients de l'art antérieur mentionnés ci-dessus et en particulier, tout d'abord, de proposer une machine de distribution de boissons qui soit pratique à utiliser, en particulier en donnant plus de souplesse d'utilisation pour le consommateur. Un autre but de l'invention est de proposer une telle machine tout en limitant la complexité et le coût de fabrication.

**Pour** cela, un premier aspect de l'invention concerne une machine de distribution de boissons chaudes comprenant :
- un dispositif de distribution de boisson chaude avec au moins une buse de distribution de boisson chaude,
- un bac d'égouttage, agencé sous la buse de distribution,
- un circuit de commande,
- un dispositif de détection qui génère et transmet au circuit de commande un signal de niveau haut lorsqu'un liquide remplissant le bac d'égouttage atteint un niveau haut,
caractérisé en ce que le dispositif de détection génère et transmet au circuit de commande un signal de niveau intermédiaire lorsque le liquide remplissant le bac d'égouttage atteint un niveau intermédiaire, et en ce que le circuit de commande comprend un dispositif d'alerte pour alerter un utilisateur que le liquide est au niveau intermédiaire.

La machine selon la mise en oeuvre ci-dessus comprend un dispositif de détection qui permet de détecter un niveau de liquide intermédiaire, et un circuit d'alerte pour avertir l'utilisateur que le liquide est au niveau intermédiaire, si bien que l'utilisateur ou le consommateur peut anticiper la vidange du bac d'égouttage, et peut éviter de se trouver pris au dépourvu.

Selon un mode de réalisation, le dispositif de détection peut comprendre :
- un circuit de mesure,
- une première électrode agencée pour détecter le niveau haut,
- une deuxième électrode agencée pour détecter le niveau intermédiaire,
- un commutateur, agencé pour connecter alternativement soit la première électrode soit la deuxième électrode au circuit de mesure.

Selon la mise en oeuvre ci-dessus, un seul circuit de mesure est suffisant, même si deux électrodes sont prévues, chacune pour détecter un niveau de liquide spécifique. En effet, en connectant l'une ou l'autre des électrodes au circuit de mesure, on peut procurer la fonction de détection du niveau intermédiaire avec un seul circuit de mesure. Un commutateur permet d'assurer cette fonction avec une complexité moindre qu'avec deux circuits de mesure différents. De plus, on peut noter qu'avec un seul et même circuit de mesure, les éventuelles erreurs dans l'estimation de l'impédance seront identiques entre la détection du niveau intermédiaire et du niveau bac plein. Les estimations de niveau seront cohérentes. On peut envisager d'autres électrodes pour indiquer plusieurs niveaux intermédiaires.

Selon un mode de réalisation, le dispositif de détection peut être agencé pour :
- commander le commutateur pour connecter le circuit de mesure avec la deuxième électrode, après un démarrage de la machine de distribution et/ou tant que le liquide est en dessous du niveau intermédiaire,
- commander le commutateur pour connecter le circuit de mesure avec la première électrode, dès que du liquide est détecté au niveau intermédiaire. Selon cette mise en oeuvre, le dispositif de détection scrute d'abord la deuxième électrode qui indique le niveau intermédiaire, et passe ensuite à la surveillance de la première électrode qui indique le niveau haut, une fois que du liquide a été détecté au niveau intermédiaire. On peut aussi envisager de faire une scrutation périodique et répétitive des électrodes en connectant / déconnectant de manière régulière (toutes les secondes, toutes les minutes par exemple) chaque électrode au circuit de mesure.

Selon un mode de réalisation, un seul circuit de mesure peut être prévu pour être connecté alternativement soit à la première électrode soit à la deuxième électrode.

**Selon** un mode de réalisation, la machine de distribution peut comprendre une électrode de base, constamment connectée au circuit de mesure. L'électrode de base est typiquement agencée au fond du bac ou au moins au niveau intermédiaire pour être immergée dès que quelques gouttes tombent dans le bac d'égouttage ou dès que le liquide est au niveau intermédiaire.

**Selon** un mode de réalisation, le circuit de mesure peut permettre d'effectuer alternativement une estimation de l'impédance entre :
- soit l'électrode de base et la première électrode,
- soit l'électrode de base et la deuxième électrode. On peut prévoir d'effectuer les estimations l'une après l'autre. On peut prévoir une seule alternance dans l'estimation, avec le changement par exemple après un événement particulier (par exemple lorsqu'une condition particulière est remplie, comme lorsque le niveau intermédiaire est atteint, alors on passe de l'estimation entre l'électrode de base et la deuxième électrode à l'estimation entre l'électrode de base et la première électrode). On peut prévoir plusieurs alternances d'estimations successives, par exemple de manière régulière. On peut aussi prévoir une mise en configuration particulière après un événement donné (par exemple lorsque la machine est allumée ou lorsque la grille d'égouttage est mise en place, on impose une estimation entre l'électrode de base et la deuxième électrode), et ensuite on alterne les estimations, de manière régulière, ou seulement à la suite d'un autre évènement donné (lorsque le niveau intermédiaire est atteint par exemple).

Selon un mode de réalisation, la machine de distribution peut comprendre une grille d'égouttage au-dessus du bac d'égouttage, et dans laquelle au moins l'une de la première électrode, ou de la deuxième électrode ou de l'électrode de base comprend deux portions de contacts électrique avec la grille d'égouttage pour permettre une détection de présence de la grille d'égouttage par estimation d'impédance. Sans ajouter d'électrode, on peut réaliser la détection de la présence de la grille d'égouttage.

Selon un mode de réalisation, le circuit de détection peut être agencé pour commander le commutateur pour connecter le circuit de mesure avec la deuxième électrode, après chaque retrait et/ou chaque mise en place de la grille d'égouttage. Ainsi, il y a vérification systématique du niveau intermédiaire de liquide à chaque fois que la grille d'égouttage est déplacée (ce qui indique que le bac d'égouttage est retiré pour être vidé). Alternativement, il peut être prévu de détecter la présence du bac d'égouttage, et de commander le commutateur pour connecter le circuit de mesure avec la deuxième électrode, après chaque retrait et/ou chaque mise en place du bac d'égouttage. Autrement dit, le système vérifie systématiquement à chaque mise en place de la grille ou du bac d'égouttage si le niveau de liquide dépasse ou non le niveau intermédiaire. Si le niveau de liquide est en dessous du niveau intermédiaire, le circuit de mesure peut rester connecté à la deuxième électrode, et si le niveau de liquide est au-dessus du niveau intermédiaire, le circuit de mesure peut alors être connecté à la première électrode.

Selon un mode de réalisation :
- la première électrode peut plonger dans le bac d'égouttage à une première profondeur,
- la deuxième électrode peut plonger dans le bac d'égouttage à une deuxième profondeur, supérieure à la première profondeur.

**Selon** un mode de réalisation, le circuit de mesure peut comprendre un oscillateur électronique. L'oscillateur électronique sert à générer une tension variable dont la fréquence, qui varie proportionnellement à l'impédance du liquide, est lue par un microcontrôleur du circuit de mesure. L'oscillateur électronique permet ainsi indirectement d'estimer l'impédance entre les électrodes pour vérifier si elles baignent dans le liquide, et un seul oscillateur suffit, puisque le commutateur le connecte alternativement soit à la première électrode soit à la deuxième électrode.

Selon un mode de réalisation, le circuit de commande peut autoriser le lancement de la réalisation d'une boisson chaude bien que le signal de niveau intermédiaire ait été généré et peut interdire le lancement de la réalisation d'une boisson chaude lorsque le signal de niveau haut a été généré. L'utilisateur peut encore faire fonctionner la machine de distribution, même si le niveau intermédiaire est atteint.

Selon un mode de réalisation, le dispositif d'alerte de circuit de commande peut comporter un afficheur configuré pour afficher un premier pictogramme lorsque le dispositif de détection émet le signal de niveau intermédiaire et un deuxième pictogramme lorsque le dispositif de détection émet le signal de niveau haut.

Selon un mode de réalisation, le bac d'égouttage peut présenter un volume V de remplissage correspondant à un niveau haut de liquide et le bac d'égouttage peut présenter un volume Vi de remplissage correspondant au niveau intermédiaire, Vi étant supérieur à 0,6V, de préférence supérieur à 0,7V.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue schématique d'une machine de distribution avec un bac d'égouttage ;
[fig. 2] représente une vue simplifiée du bac d'égouttage de la machine de la figure 1, avec des électrodes faisant partie d'un dispositif de détection d'un niveau de liquide dans le bac d'égouttage ;
[fig. 3] représente un schéma électrique de connexion des électrodes du dispositif de détection de la figure 2.

### Description détaillée de mode(s) de réalisation

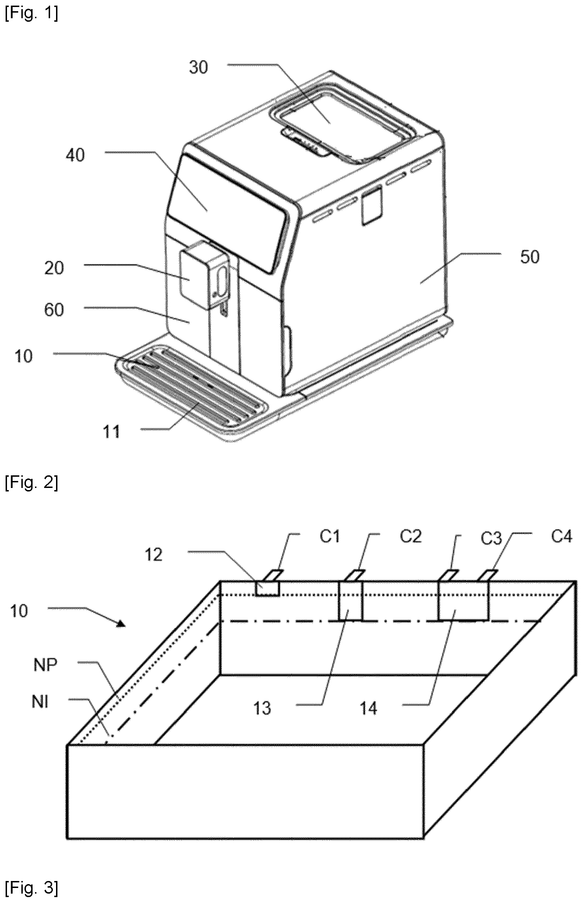

La figure 1 représente une machine de distribution de boissons, ici une machine à café, qui comprend notamment :
- un boîtier 50,
- une chambre de stockage 30 de café en grains,
- un écran 40 formant une interface homme machine,
- un dispositif de distribution 20 avec une buse de distribution,
- un réservoir d'eau 60,
- un bac d'égouttage 10 avec une grille d'égouttage 11.
On peut aussi prévoir une buse de distribution d'eau chaude, pour permettre de préparer une tisane à part.

Le boitier 50 comprend typiquement les organes classiques d'une machine à café, avec notamment :
- une unité de broyage pour moudre les grains de café venant de la chambre de stockage 30,
- une unité de chauffage pour chauffer l'eau venant du réservoir d'eau 60,
- une unité de pompage pour faire transiter l'eau le long du circuit de production de café,
- un circuit de commande relié aux différents organes pour les commander.

En ce qui concerne le bac d'égouttage 10, ce dernier se trouve sous la buse de distribution de boissons du dispositif de distribution 20, et supporte la grille d'égouttage 11. La fonction principale du bac d'égouttage 10 est de recevoir des éventuelles gouttes ou doses de liquide qui peuvent tomber de la buse de distribution si l'utilisateur retire la tasse trop rapidement de la grille d'égouttage 11 ou la place de manière incorrecte.

Il faut donc prévoir de vider régulièrement le bac d'égouttage 10, et il est prévu de détecter le liquide s'il arrive à un niveau donné dans le bac d'égouttage 10, pour prévenir l'utilisateur de vider le bac d'égouttage et éviter tout débordement.

**A** cet effet, et comme le montre la figure 2, le bac d'égouttage 10 comprend une pluralité d'électrodes qui font partie d'un dispositif de détection du niveau de liquide dans le bac d'égouttage 10.

Dans le détail, le dispositif de détection comprend un circuit de mesure M prévu pour permettre d'estimer l'impédance entre deux électrodes. Lorsqu'au moins une des deux électrodes ne plonge pas dans le liquide, alors l'impédance entre ces deux électrodes est quasi infinie, et lorsque les deux électrodes plongent dans le liquide, alors l'impédance entre ces deux électrodes chute fortement (à environ 10000 ohms). Un oscillateur électronique est utilisé pour générer une tension variable dont la fréquence, qui varie proportionnellement à l'impédance du liquide, est lue par un microcontrôleur du circuit de mesure. Ainsi, une estimation d'impédance effectuée à partir d'un oscillateur électronique permet de distinguer si les électrodes sont en contact ou non avec le liquide collecté dans le bac d'égouttage 10.

Dans cet exemple particulier et non limitatif, le bac d'égouttage 10 comprend une première électrode 12 avec un premier contact C1, une deuxième électrode 13 avec un deuxième contact C2, et une électrode de base 14 avec un troisième contact C3 et un quatrième contact C4. Les contacts de chaque électrode permettent de connecter chaque électrode respective au circuit de mesure M de manière réversible, lors de la mise en place du bac d'égouttage 10 sur la machine après une vidange par exemple.

On peut noter que :
- la première électrode 12 plonge dans le bac d'égouttage 10 à une première profondeur qui définit un niveau haut NP de liquide que peut contenir le bac d'égouttage 10,
- la deuxième électrode 13 et l'électrode de base 14 plongent dans le bac d'égouttage 10 à une deuxième profondeur plus importante qui définit un niveau intermédiaire NI de liquide dans le bac d'égouttage 10. On peut noter que l'électrode de base 14 pourrait être placée plus bas dans le bac d'égouttage, cela ne changerait pas le fonctionnement ni la détection du niveau intermédiaire NI.

Selon cette mise en oeuvre, lorsque le niveau de liquide augmente et atteint le niveau intermédiaire NI, alors la deuxième électrode 13 et l'électrode de base 14 sont chacune en contact avec le liquide et l'impédance entre ces deux pièces chute fortement (l'impédance passe de quasiment l'infini à quelques milliers d'ohms). Ensuite, lorsque le niveau de liquide augmente encore et atteint le niveau haut NP, alors la première électrode 12 et l'électrode de base 14 sont chacune en contact avec le liquide et l'impédance entre ces deux électrodes 12, 14 chute fortement (l'impédance passe de quasiment l'infini à quelques milliers d'ohms).

En ce qui concerne l'électrode de base 14, on peut noter qu'elle comporte le troisième contact C3 et le quatrième contact C4, afin de détecter la présence de la grille d'égouttage 14. En effet, lorsque la grille d'égouttage 14 et posée sur le bac d'égouttage 10, elle touche simultanément le troisième contact C3 et le quatrième contact C4, si bien que l'impédance entre le troisième contact C3 et le quatrième contact C4 passe de l'infini à quasiment zéro. Une fois que la grille d'égouttage 11 est détectée en place, via la connexion électrique entre le troisième contact C3 et le quatrième contact C4, le circuit de commande peut autoriser le fonctionnement de la machine de distribution.

Selon l'invention, la machine de distribution de boisson comprend un dispositif d'alerte, et lorsque le niveau de liquide atteint le niveau intermédiaire NI, alors le circuit de commande envoie via le dispositif d'alerte un signal à l'utilisateur que le liquide est au niveau intermédiaire, pour l'inviter à vidanger le bac d'égouttage de manière préventive. On peut prévoir d'afficher un pictogramme ou un message sur l'écran 40, ou émettre un son particulier. Cependant, la machine de distribution peut continuer à fonctionner, car même si des gouttes tombent dans le bac d'égouttage 10, cela ne provoquera pas de débordement.

Lorsque le niveau de liquide atteint le niveau haut NP, alors le circuit de commande envoie via le dispositif d'alerte un signal à l'utilisateur que le liquide est au niveau haut, pour l'inviter à vidanger le bac d'égouttage avant toute autre utilisation. On peut prévoir d'afficher un autre pictogramme ou un message sur l'écran 40, ou émettre un son particulier. A ce stade, le circuit de commande bloque le fonctionnement de la machine de distribution pour éviter tout débordement.

On peut prévoir les longueurs des électrodes pour que le niveau intermédiaire soit environ 60% ou 70% du volume total du bac d'égouttage 10, et le niveau maximal soit environ 85%, ou 90% du volume total du bac d'égouttage 10.

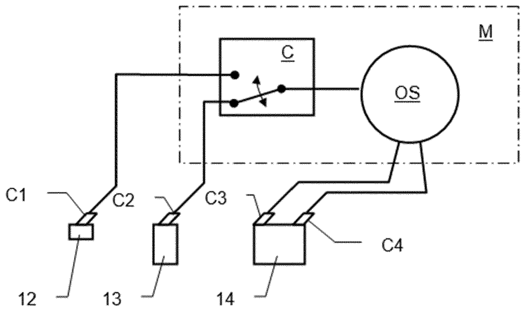

La figure 3 représente le schéma électrique du circuit de mesure M utilisé pour estimer l'impédance entre les différentes électrodes. L'estimation de l'impédance est effectuée à partir de la lecture, par un microcontrôleur du circuit de mesure, de la fréquence d'une tension variable générée par un oscillateur électronique OS. A cet effet, chaque électrode est reliée à l'oscillateur électronique OS, afin de pouvoir estimer l'impédance :
- entre l'électrode de base 14 et la deuxième électrode 13 pour savoir si le liquide est au niveau intermédiaire NI,
- entre l'électrode de base 14 et la première électrode 12 pour savoir si le liquide est au niveau haut NP.

Afin de réduire les coûts, il est prévu un seul commutateur C qui permet de connecter alternativement soit la première électrode 12 soit la deuxième électrode 13 au circuit de mesure M, en particulier à l'oscillateur électronique OS. Le commutateur C'est donc agencé entre l'oscillateur électronique OS et la première électrode 12 ou la deuxième électrode 13. Ainsi, un seul et même circuit de mesure M et un seul et même oscillateur électronique OS sont suffisants pour procurer la détection du liquide au niveau intermédiaire NI et au niveau haut NP.

On peut prévoir de connecter systématiquement l'oscillateur électronique OS et la deuxième électrode 13 au démarrage de la machine, et/ou à la mise en place de la grille d'égouttage 11, pour vérifier si du liquide se trouve au niveau intermédiaire NI ou pas encore. On peut prévoir de commander le commutateur C pour connecter l'oscillateur électronique OS et la première électrode 12 dès que du liquide se trouve au niveau intermédiaire NI, c'est-à-dire dès que l'impédance entre l'électrode de base 14 et la deuxième électrode 13 passe à quelques milliers d'ohms.

On peut aussi prévoir de commander le commutateur C pour connecter à l'oscillateur électronique OS de manière régulière et répétitive chacune de la première électrode 12 et de la deuxième électrode 13, pour effectuer à intervalles réguliers une estimation de l'impédance et analyser le signal pour envoyer ou non les alarmes de bac rempli au niveau intermédiaire NI ou au niveau maximal NP.

Ainsi, avec un seul oscillateur électronique OS, le commutateur C permet de proposer une alarme de niveau intermédiaire NI dans le bac d'égouttage 10. De plus, comme il s'agit du même circuit de mesure qui fait les estimations d'impédance, l'analyse du signal est la même et ne nécessite pas de comparaison ou ajustement entre l'analyse pour le niveau intermédiaire NI ou le niveau maximal NP.

On peut prévoir de faire les estimations d'impédance de manière régulière (toutes les secondes, toutes les minutes...), ou lors de chaque distribution de boisson chaude, ou seulement un peu après chaque distribution de boisson chaude.

### Application industrielle

Une machine de distribution de boisson selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention. En particulier, on peut noter que la première électrode 12 et de la deuxième électrode 13 ont des longueurs différentes, mais on peut prévoir des bornes placées à des hauteurs différentes dans le bac d'égouttage 10. On peut aussi proposer la détection de plusieurs niveaux intermédiaires, avec plus d'électrodes, mais toujours un seul commutateur C et un seul oscillateur électronique OS.

## Revendications

1. Machine de distribution de boissons chaudes comprenant :
- un dispositif de distribution (20) de boisson chaude avec au moins une buse de distribution de boisson chaude,
- un bac d'égouttage (10), agencé sous la buse de distribution,
- un circuit de commande,
- un dispositif de détection qui génère et transmet au circuit de commande un signal de niveau haut (NP) lorsqu'un liquide remplissant le bac d'égouttage (10) atteint un niveau haut (NP),
**caractérisé en ce que** le dispositif de détection génère et transmet au circuit de commande un signal de niveau intermédiaire (NI) lorsque le liquide remplissant le bac d'égouttage (10) atteint un niveau intermédiaire (NI), et **en ce que** le circuit de commande comprend un dispositif d'alerte pour alerter un utilisateur que le liquide est au niveau intermédiaire (NI).

2. Machine de distribution selon la revendication 1, dans laquelle le dispositif de détection comprend :
- un circuit de mesure (M),
- une première électrode (12) agencée pour détecter le niveau haut (NP),
- une deuxième électrode (13) agencée pour détecter le niveau intermédiaire (NI),
- un commutateur (C), agencé pour connecter alternativement soit la première électrode (12) soit la deuxième électrode (13) au circuit de mesure (M).

3. Machine de distribution selon la revendication 2, dans laquelle le dispositif de détection est agencé pour :
- commander le commutateur (C) pour connecter le circuit de mesure (M) avec la deuxième électrode (13), après un démarrage de la machine de distribution et/ou tant que le liquide est en dessous du niveau intermédiaire (NI),
- commander le commutateur (C) pour connecter le circuit de mesure (M) avec la première électrode (12), dès que du liquide est détecté au niveau intermédiaire (NI).

4. Machine de distribution selon la revendication 2 ou 3, dans laquelle un seul circuit de mesure (M) est prévu pour être connecté alternativement soit à la première électrode (12) soit à la deuxième électrode (13).

5. Machine de distribution selon l'une des revendications 2 à 4, comprenant une électrode de base (14), constamment connectée au circuit de mesure (M).

6. Machine de distribution selon la revendication 5, dans laquelle le circuit de mesure (M) effectue alternativement une estimation de l'impédance entre :
- soit l'électrode de base (14) et la première électrode (12),
- soit l'électrode de base (14) et la deuxième électrode (13).

7. Machine de distribution selon la revendication 5 ou 6, comprenant une grille d'égouttage (11) au-dessus du bac d'égouttage (10), et dans laquelle au moins l'une de la première électrode (12), ou de la deuxième électrode (13) ou de l'électrode de base (14) comprend deux portions de contacts électrique avec la grille d'égouttage (11) pour permettre une détection de présence de la grille d'égouttage (11) par estimation d'impédance.

8. Machine de distribution selon la revendication 7, dans laquelle le circuit de détection est agencé pour commander le commutateur (C) pour connecter le circuit de mesure (M) avec la deuxième électrode (13), après chaque retrait et/ou chaque mise en place de la grille d'égouttage (11).

9. Machine de distribution selon l'une des revendications 2 à 8, dans laquelle :
- la première électrode (12) plonge dans le bac d'égouttage (10) à une première profondeur,
- la deuxième électrode (13) plonge dans le bac d'égouttage (10) à une deuxième profondeur, supérieure à la première profondeur.

10. Machine de distribution selon l'une des revendications 2 à 9, dans laquelle le circuit de mesure (M) comprend un oscillateur électronique (OS).

11. Machine de distribution selon l'une des revendications 1 à 10, dans laquelle le circuit de commande autorise le lancement de la réalisation d'une boisson chaude bien que le signal de niveau intermédiaire (NI) ait été généré et interdit le lancement de la réalisation d'une boisson chaude lorsque le signal de niveau haut (NP) a été généré.

12. Machine de distribution selon l'une des revendications 1 à 11, dans laquelle le dispositif d'alerte de circuit de commande comporte un afficheur configuré pour afficher un premier pictogramme lorsque le dispositif de détection émet le signal de niveau intermédiaire (NI) et un deuxième pictogramme lorsque le dispositif de détection émet le signal de niveau haut (NP).

13. Machine de distribution selon l'une des revendications 1 à 12, dans laquelle le bac d'égouttage (10) présente un volume V de remplissage correspondant à un niveau haut (NP) de liquide et en ce que le bac d'égouttage (10) présente un volume Vi de remplissage correspondant au niveau intermédiaire (NI), Vi étant supérieur à 0,6V, de préférence supérieur à 0,7V.

## Patentansprüche

1. Heißgetränke-Ausgabemaschine, die Folgendes umfasst:
- eine Heißgetränke-Ausgabevorrichtung (20) mit mindestens einer Heißgetränke-Ausgabedüse,
- eine Auffangwanne (10), die unterhalb der Ausgabedüse angeordnet ist,
- eine Steuerschaltung,
- eine Detektionsvorrichtung, die ein Hoher-Füllstand-Signal (NP) erzeugt und an die Steuerschaltung überträgt, wenn eine die Auffangwanne (10) füllende Flüssigkeit einen hohen Füllstand (NP) erreicht,
**dadurch gekennzeichnet, dass** die Detektionsvorrichtung ein Mittlerer-Füllstand-Signal (NI) erzeugt und an die Steuerschaltung überträgt, wenn die die Auffangwanne (10) füllende Flüssigkeit einen mittleren Füllstand (NI) erreicht, und dass die Steuerschaltung eine Warnvorrichtung umfasst, um einen Benutzer zu warnen, dass sich die Flüssigkeit auf einem mittleren Füllstand (NI) befindet.

2. Ausgabemaschine nach Anspruch 1, wobei die Detektionsvorrichtung Folgendes umfasst:
- eine Messschaltung (M),
- eine erste Elektrode (12), die dazu ausgebildet ist, den hohen Füllstand (NP) zu detektieren,
- eine zweite Elektrode (13), die dazu ausgebildet ist, den mittleren Füllstand (NI) zu detektieren,
- einen Schalter (C), der dazu ausgebildet ist, abwechselnd entweder die erste Elektrode (12) oder die zweite Elektrode (13) mit der Messschaltung (M) zu verbinden.

3. Ausgabemaschine nach Anspruch 2, wobei die Detektionsvorrichtung für Folgendes ausgebildet ist:
- Steuern des Schalters (C), um die Messschaltung (M) mit der zweiten Elektrode (13) zu verbinden, nachdem die Ausgabemaschine gestartet wurde und/oder solange sich die Flüssigkeit unter dem mittleren Füllstand (NI) befindet,
- Steuern des Schalters (C), um die Messschaltung (M) mit der ersten Elektrode (12) zu verbinden, sobald die Flüssigkeit auf dem mittleren Füllstand (NI) detektiert wird.

4. Ausgabemaschine nach Anspruch 2 oder 3, wobei eine einzelne Messschaltung (M) vorgesehen ist, um abwechselnd entweder mit der ersten Elektrode (12) oder der zweiten Elektrode (13) verbunden zu werden.

5. Ausgabemaschine nach einem der Ansprüche 2 bis 4, die eine Basiselektrode (14) umfasst, die ständig mit der Messschaltung (M) verbunden ist.

6. Ausgabemaschine nach Anspruch 5, wobei die Messschaltung (M) abwechselnd eine Impedanzschätzung zwischen Folgendem durchführt:
- entweder der Basiselektrode (14) und der ersten Elektrode (12),
- oder der Basiselektrode (14) und der zweiten Elektrode (13).

7. Ausgabemaschine nach Anspruch 5 oder 6, die ein Auffanggitter (11) über der Auffangwanne (10) umfasst, und wobei mindestens eine von der ersten Elektrode (12), der zweiten Elektrode (13) oder der Basiselektrode (14) zwei elektrische Kontaktabschnitte mit dem Auffanggitter (11) umfasst, um eine Detektion des Vorhandenseins des Auffanggitters (11) durch die Impedanzschätzung zu ermöglichen.

8. Ausgabemaschine nach Anspruch 7, wobei die Detektionsschaltung dazu ausgebildet ist, den Schalter (C) zu steuern, um die Messschaltung (M) mit der zweiten Elektrode (13) jedes Mal zu verbinden, nachdem das Auffanggitter (11) entfernt und/oder eingesetzt wurde.

9. Ausgabemaschine nach einem der Ansprüche 2 bis 8, wobei:
- die erste Elektrode (12) bis zu einer ersten Tiefe in die Auffangwanne (10) eingetaucht ist,
- die zweite Elektrode (13) bis zu einer zweiten Tiefe, die größer als die erste Tiefe ist, in die Auffangwanne (10) eingetaucht ist.

10. Ausgabemaschine nach einem der Ansprüche 2 bis 9, wobei die Messschaltung (M) einen elektronischen Oszillator (OS) umfasst.

11. Ausgabemaschine nach einem der Ansprüche 1 bis 10, wobei die Steuerschaltung den Start der Zubereitung eines Heißgetränks ermöglicht, wenn auch das Mittlerer-Füllstand-Signal (NI) erzeugt wurde, und den Beginn der Zubereitung eines Heißgetränks verhindert, wenn das Hoher-Füllstand-Signal (NP) erzeugt wurde.

12. Ausgabemaschine nach einem der Ansprüche 1 bis 11, wobei die Warnvorrichtung der Steuerschaltung eine Anzeige aufweist, die dazu konfiguriert ist, ein erstes Piktogramm anzuzeigen, wenn die Detektionsvorrichtung das Mittlerer-Füllstand-Signal (NI) sendet, ein zweites Piktogramm anzuzeigen, wenn die Detektionsvorrichtung das Hoher-Füllstand-Signal (NP) sendet.

13. Ausgabemaschine nach einem der Ansprüche 1 bis 12, wobei die Auffangwanne (10) ein dem hohen Füllstand (NP) entsprechendes Füllvolumen V aufweist und die Auffangwanne (10) ein dem mittleren Füllstand (NI) entsprechendes Füllvolumen Vi aufweist, wobei Vi größer als 0,6 V, vorzugsweise größer als 0,7 V ist.

## Claims

1. A machine for dispensing hot drinks comprising:
- a device for dispensing (20) hot drink with at least one hot drink dispensing nozzle,
- a drip tray (10), arranged under the dispensing nozzle,
- a control circuit,
- a detection device which generates and transmits to the control circuit a high level signal (NP) when a liquid filling the drip tray (10) reaches a high level (NP),
**characterized in that** the detection device generates and transmits to the control circuit an intermediate level signal (NI) when the liquid filling the drip tray (10) reaches an intermediate level (NI), and **in that** the control circuit comprises an alert device to alert a user that the liquid is at the intermediate level (NI).

2. The dispensing machine according to claim 1, wherein the detection device comprises:
- a measuring circuit (M),
- a first electrode (12) arranged to detect the high level (NP),
- a second electrode (13) arranged to detect the intermediate level (NI),
- a switch (C), arranged to alternately connect either the first electrode (12) or the second electrode (13) to the measuring circuit (M).

3. The dispensing machine according to claim 2, wherein the detection device is arranged to:
- control the switch (C) to connect the measuring circuit (M) with the second electrode (13), after starting the dispensing machine and/or as long as the liquid is below the intermediate level (NI),
- control the switch (C) to connect the measuring circuit (M) with the first electrode (12), as soon as liquid is detected at the intermediate level (NI).

4. The dispensing machine according to claim 2 or 3, wherein a single measuring circuit (M) is provided to be connected alternately either to the first electrode (12) or to the second electrode (13).

5. The dispensing machine according to any of claims 2 to 4, comprising a base electrode (14), constantly connected to the measuring circuit (M).

6. The dispensing machine according to claim 5, wherein the measuring circuit (M) alternately performs an impedance estimation between:
- either the base electrode (14) and the first electrode (12),
- or the base electrode (14) and the second electrode (13).

7. The dispensing machine according to claim 5 or 6, comprising a drip grid (11) above the drip tray (10), and in which at least one of the first electrode (12), or the second electrode (13) or the base electrode (14) comprises two portions of electrical contacts with the drip grid (11) to allow a detection of the presence of the drip grid (11) by impedance estimation.

8. The dispensing machine according to claim 7, wherein the detection circuit is arranged to control the switch (C) to connect the measuring circuit (M) with the second electrode (13), after each withdrawal and/or each installation of the drip grid (11).

9. The dispensing machine according to any of claims 2 to 8, wherein:
- the first electrode (12) immerses into the drip tray (10) at a first depth,
- the second electrode (13) immerses into the drip tray (10) at a second depth, greater than the first depth.

10. The dispensing machine according to any of claims 2 to 9, wherein the measuring circuit (M) comprises an electronic oscillator (OS).

11. The dispensing machine according to any of claims 1 to 10, wherein the control circuit authorizes the launching of the production of a hot drink although the intermediate level signal (NI) has been generated and prohibits the launching of the production of a hot drink when the high level signal (NP) has been generated.

12. The dispensing machine according to any of claims 1 to 11, wherein the control circuit alert device includes a display configured to display a first pictogram when the detection device emits the intermediate level signal (ND) and a second pictogram when the detection device emits the high level signal (NP).

13. The dispensing machine according to any of claims 1 to 12, wherein the drip tray (10) has a filling volume V corresponding to a high level (NP) of liquid and in that the drip tray (10) has a filling volume Vi corresponding to the intermediate level (NI), Vi being greater than 0.6V, preferably greater than 0.7V.
